# EUROPEAN PATENT SPECIFICATION

(11) **EP 2 821 442 B1**
(45) Date of publication and mention of the grant of the patent: **13.06.2018**
(21) Application number: 12827802.5
(22) Date of filing: 26.04.2012
(51) Int. Cl.: C08L 83/04, C08K 3/36, C08K 5/5415, C08K 3/38, C08K 3/26, H01B 3/28

(54) **CERAMIC SILICON RUBBER FOAM AND PREPARATION METHOD THEREFOR**
KERAMISCHER SILIKONKAUTSCHUKSCHAUMSTOFF UND HERSTELLUNGSVERFAHREN DAFÜR
MOUSSE DE CAOUTCHOUC DE SILICONE ET DE CÉRAMIQUE ET PROCÉDÉ POUR LE PRÉPARER

(30) Priority: 29.08.2011 CN 201110266011
(43) Date of publication of application: 07.01.2015
(73) Proprietor: Shenzhen Woer Heat-shrinkable Material Co., Ltd., Shenzhen, Guangdong 518118 (CN)
(72) Inventor: KANG, Shufeng, Shenzhen Guangdong 518118 (CN); ZHOU, Heping, Shenzhen Guangdong 518118 (CN); ZHAO, Yuan, Shenzhen Guangdong 518118 (CN); LIU, Weidong, Shenzhen Guangdong 518118 (CN)
(74) Representative: Moore, Graeme Patrick
(86) International application number: PCT/CN2012/074707
(87) International publication number: WO 2013/029382

(56) References cited:
- CN-A- 1 850 908
- CN-A- 101 698 748
- CN-A- 101 724 272
- CN-A- 101 787 846
- CN-A- 102 040 839
- DATABASE WPI Week 200929 Thomson Scientific, London, GB; AN 2009-G63762 XP002747762, & WO 2009/041507 A1 (NTN CORP) 2 April 2009 (2009-04-02)

## Description

### BACKGROUND OF THE INVENTION

### Field of Invention

The present invention relates to a rubber foam, and particularly to a ceramic silicone rubber foam having a fire prevention function.

### Related Art

At present, most fire retardant cables use magnesium oxide minerals for insulation or are wound by mica tape to achieve a fire retardant function.

However, the magnesium oxide mineral fire-resistant insulating cable has the following disadvantages in manufacturing and application: first, high equipment costs; specialized production and processing equipment is required for the magnesium oxide mineral fire-resistant insulating cable, and the equipment cost is high; secondly, high production costs; the protective covering of the magnesium oxide mineral fire-resistant insulating cable is made of copper, and the price of copper is high, which leads to high production costs; as a result, the magnesium oxide mineral fire-resistant insulating cable is limited to a certain degree during actual application; thirdly, inconvenience during production and processing, transportation, line laying and installation, and use; the copper jacket magnesium oxide mineral fire-resistant insulating cable has special requirements in the process of production and processing, transportation, line laying and installation and use; for example, the production and processing of the magnesium oxide mineral fire-resistant insulating cable is not as convenient as that of high-molecule materials, the laying and installation is complex, and the costs of raw materials are high; therefore, the cable is not yet applied in a wide range, especially in civil buildings.

However, the mica tape wound fire-retardant cable needs to be wound by multiple layers of mica tape in the production process. Due to the restriction of technological conditions, lap defects always occur at the lap seam. In addition, the mica tape gets brittle and falls off easily after being burned, which greatly reduces the fire retardant effect, and results in a line short; therefore, it is difficult to ensure safe and smooth power supply and communication in the case of a fire.

Therefore, a fire-resistant material is in urgent need to replace the magnesium oxide mineral fire-resistant insulating or mica tape winding manner, so as to achieve the fire resistant function.

### SUMMARY

An objective of the present application is to provide a ceramic silicone rubber foam that can be easily processed, has low production costs and has a fire resistant function, and a method for preparing the same and a use of the same.

In order to achieve the objective, the present application provides the following:
A ceramic silicone rubber foam, comprising, by weight:
60 to 100 parts of silicone rubber;
20 to 100 parts of silicon dioxide;
1 to 20 parts of silicone oil;
0.1 to 10 parts of a coupling agent;
20 to 120 parts of ceramic powder, wherein the ceramic powder is one or more of silicate glass powder, borate glass powder, phosphate glass powder and lead-based glass powder;
10 to 35 parts of a foaming agent; and
1 to 10 parts of a foaming auxiliary agent.

Further, the silicone rubber is one or more of dimethyl silicone rubber, methyl vinyl silicone rubber and methyl phenyl vinyl silicone rubber.

Further, the viscosity of the silicone oil is 10 to 1,000 centipoises.

Further, the coupling agent is any one or more of a silane coupling agent, a titanate coupling agent and an aluminium-titanium compound coupling agent.

Further, the coupling agent is one or more of γ-(2,3-epoxypropoxy)propyltrimethoxysilane, vinyltrimethoxysilane, vinyltris(β-methoxyethoxy)silane, triisostearoyl isopropoxy titanate and ethylene dioleoyltitanate.

Further, the foaming agent is one or more of azodicarbonamide, dinitrosopentamethylene tetramine and 4,4'-oxybis(benzenesulfonyl hydrazide).

Further, the foaming auxiliary agent is one or more of zinc stearate, calcium stearate and active zinc oxide.

A method for preparing a ceramic silicone rubber foam, comprising:
(1) mixing the materials of 60 to 100 parts of silicone rubber, 20 to 100 parts of silicon dioxide, 1 to 20 parts of silicone oil, 0.1 to 10 parts of a coupling agent, 10 to 35 parts of a foaming agent, and 1 to 10 parts of a foaming auxiliary agent in a kneading machine, wherein the temperature is not higher than 100°C;
(2) vacuumizing the kneading machine for 30 to 120 min, wherein the temperature is kept not higher than 165°C;
(3) after vacuumizing the kneading machine, adding 20 to 120 parts of ceramic powder to the kneading machine, so that the ceramic powder is mixed uniformly with the mixed silicone rubber, silicon dioxide, silicone oil, and a coupling agent, so as to form a lump-like ceramic rubber, wherein the ceramic powder is one or more of silicate glass powder, borate glass powder, phosphate glass powder and lead-based glass powder;
(4) taking the lump-like ceramic rubber out of the kneading machine, and cooling the lump-like ceramic rubber;
(5) open-milling the cooled lump-like ceramic rubber on an open mill, so as to cut the lump-like ceramic rubber into sheets; and
(6) filtering the sheet-like ceramic rubber into strips on a rubber filter, so as to obtain the ceramic silicone rubber foam.

A method for preparing a ceramic silicone rubber foam, comprising:
(1) mixing the materials of 60 to 100 parts of silicone rubber, 20 to 100 parts of silicon dioxide, 1 to 20 parts of silicone oil, 0.1 to 10 parts of a coupling agent, 20 to 120 parts of ceramic powder, 10 to 35 parts of a foaming agent, and 1 to 10 parts of a foaming auxiliary agent in a kneading machine, wherein the temperature is not higher than 100°C, wherein the ceramic powder is one or more of silicate glass powder, borate glass powder, phosphate glass powder and lead-based glass powder;
(2) vacuumizing the kneading machine for 30 to 120 min, wherein the temperature is kept not higher than 165°C, and uniformly mixing the materials, to form a lump-like ceramic rubber;
(3) taking the lump-like ceramic rubber out of the kneading machine, and cooling the lump-like ceramic rubber;
(4) open-milling the cooled lump-like ceramic rubber on an open mill, so as to cut the lump-like ceramic rubber into sheets; and
(5) filtering the sheet-like ceramic rubber into strips on a rubber filter, so as to obtain the ceramic silicone rubber foam.

A ceramic silicone rubber flame-retardant foam, comprising the ceramic silicone rubber foam according to claim 1, 2, 3, 4 or 5, and further comprising 5 to 30 parts of a flame retardant.

Further, the flame retardant is a halogen-free flame retardant.

Further, the halogen-free flame retardant is one or more of red phosphorus, a phosphate flame retardant, magnesium hydroxide, aluminium hydroxide, zinc borate, ammonium polyphosphate, melamine pyrophosphate or polyphosphate and a pentaerythritol flame retardant.

Further, the flame retardant is a halogen-containing flame retardant.

Further, the halogen-containing flame retardant is one or more of chlorinated paraffin, tetrachlorophthalic anhydride, dibromobenzene ester, tetrabromoethane, decabromodiphenyl ether, decabromodiphenylethane, tetrabromobisphenol, octabromoether, brominated polystyrene and brominated epoxy resin.

A method for preparing a ceramic silicone rubber flame-retardant foam, comprising:
(1) mixing materials of 60 to 100 parts of silicone rubber, 20 to 100 parts of silicon dioxide, 1 to 20 parts of silicone oil, 0.1 to 10 parts of a coupling agent, 20 to 120 parts of ceramic powder, 10 to 35 parts of a foaming agent, 1 to 10 parts of a foaming auxiliary agent, and 5 to 30 parts of a flame retardant in a kneading machine, wherein the temperature is not higher than 100°C, wherein the ceramic powder is one or more of silicate glass powder, borate glass powder, phosphate glass powder and lead-based glass powder;
(2) vacuumizing the kneading machine for 30 to 120 min, wherein the temperature is kept not higher than 165°C, and uniformly mixing the materials, to form a lump-like ceramic rubber;
(3) taking the lump-like ceramic rubber out of the kneading machine, and cooling the lump-like ceramic rubber;
(4) open-milling the cooled lump-like ceramic rubber on an open mill, so as to cut the lump-like ceramic rubber into sheets; and
(5) filtering the sheet-like ceramic rubber into strips on a rubber filter, so as to obtain the ceramic silicone rubber flame-retardant foam.

The beneficial effects of the technical solutions are that the ceramic silicone rubber provided by the present application is a novel high-molecule composite material, which can be easily processed and has low production costs; the material is non-toxic and odourless at room temperature, and has good flexibility and elasticity in addition to properties of normal silicone rubbers; after being burned at a temperature of 650°C to 3,000°C for more than 3 min, the organic components in the silicone rubber may ablated and converted into a ceramic shell in a very short period of time rather than burned into ashes; moreover, the ceramic shell form a hard protective layer, and the protective layer isolates an article from the outside flame, thereby preventing the article from being continuously burnt by the flame and damaged. The longer the ablation time is, the higher the temperature is, and the harder the shell is. Furthermore, the smoke generated by the ceramic silicone rubber of the present application in the early 2 to 3 min of the ablation is non-toxic and free of halogen, because the smoke is mainly generated by the combustion of organic silicon, and the smoke disappears after 2 to 3 min of combustion, and no smoke is generated any more in the process of blocking the flame. Therefore, the ceramic silicone rubber of the present application is an excellent fire resistant material.

The ceramic silicone rubber foam not only has the fire resistance function of the ceramic silicone rubber, but also has a low density and a light weight after foaming compared with the ceramic silicone rubber of an equal volume; the thermal insulation, heat preservation and sound insulation performances of the ceramic silicone rubber foam are improved; therefore, the ceramic silicone rubber foam may be used as a thermal insulating, heat preserving and sound insulating material.

In addition to the characteristics of low density and light weight and the functions such as fire resistance, thermal insulation, heat preservation and sound insulation of the ceramic silicone rubber foam, the ceramic silicone rubber flame-retardant foam also has the flame retardant function, that is, due to the flame retardance, the ceramic silicone rubber flame-retardant foam may first remain nonflammable, so that the fire resistant and flame retardant performance is improved, and the first lien of defense against fire is formed; if the outside flame reaches a certain level and breaks through the first line of defense, the organic components in the silicone rubber may be ablated and converted into a ceramic shell in a very short period of time rather than burnt into ashes, and the ceramic shell forms a hard protective layer, and the protective layer isolates an article from the outside flame, thereby preventing the article from being continuously burnt by the flame and damaged and forming a second line of defense against fire.

### DETAILED DESCRIPTION

In order to describe the technical content, formula ratio, objectives and achieved effects of the present application, the present application is described with reference to the embodiments in the following.

The ceramic silicone rubber in this embodiment contains, by weight:
(1) 60 to 100 parts of silicone rubber, having a general formula of (RₙSiO_{4-n/2})ₘ, where R is an organic radical or an inorganic radical (for example, Me, Ph, Vi, H, OH and Et), n is the number of substituents connected to the carbon atoms, n=1, 2 or 3, and m is the degree of polymerization, and m≥2; a molecular weight preferably in the range of 450,000 to 650,000, for example, dimethylsilicone rubber (MQ), methyl vinyl silicone rubber (VMQ) and methyl phenyl vinyl silicone rubber (PVMQ);
(2) 20 to 100 parts of silicon dioxide;
(3) 1 to 20 parts of silicone oil, having a general formula of (RₓSi0_{4-x/2})_{y}, where R is an organic radical or an inorganic radical (for example, Me, Ph, Vi, H, OH and Et), x is the number of the organic radicals or the inorganic radicals connected to the silicon atom, x=1, 2 or 3, and y is the degree of polymerization, and y≥2; a viscosity of 10 to 1,000 centipoises, for example, methyl silicone oil and hydroxyl silicone oil;
(4) 0.1 to 10 parts of a coupling agent, which may be a silane coupling agent or a titanate coupling agent, for example, KH560, A171, A172, KR-TTS and OL-T671;
(5) 20 to 120 parts of ceramic powder, which may be one of silicates, borates, phosphates glass powder and lead-based glass powder or a combination thereof.

There are two methods for preparing the ceramic silicone rubber in this embodiment, where the first preparation method includes the following steps:
(1) mixing 60 to 100 parts of silicone rubber, 20 to 100 parts of silicon dioxide, 1 to 20 parts of silicone oil, and 0.1 to 10 parts of a coupling agent in a kneading machine, where the temperature is not higher than 100°C;
(2) vacuumizing the kneading machine for 30 to 120 min or 60 min preferably, where a vacuum degree may be -0.065Mpa, and the temperature is kept not higher than 165°C;
(3) adding 20 to 120 parts of ceramic powder to the kneading machine, so that the ceramic powder is mixed uniformly with the mixed silicone rubber, silicon dioxide, silicone oil, and a coupling agent, so as to form a lump-like ceramic rubber;
(4) taking the lump-like ceramic rubber out of the kneading machine, and cooling the lump-like ceramic rubber;
(5) open-milling the cooled lump-like ceramic rubber on an open mill, so as to cut the lump-like ceramic rubber into sheets; and
(6) filtering the sheet-like ceramic rubber into strips on a rubber filter, so as to obtain the ceramic silicone rubber.

The other method for preparing the ceramic silicone rubber in this embodiment includes the following steps:
(1) mixing the materials of 60 to 100 parts of silicone rubber, 20 to 100 parts of silicon dioxide, 1 to 20 parts of silicone oil, 0.1 to 10 parts of a coupling agent, and 20 to 120 parts of ceramic powder in a kneading machine, where the temperature is not higher than 100°C;
(2) vacuumizing the kneading machine for 30 to 120 min or 60 min preferably, where a vacuum degree may be -0.065Mpa, and the temperature is kept not higher than 165°C, to form a lump-like ceramic rubber;
(3) taking the lump-like ceramic rubber out of the kneading machine, and cooling the lump-like ceramic rubber;
(4) open-milling the cooled lump-like ceramic rubber on an open mill, so as to cut the lump-like ceramic rubber into sheets; and
(5) filtering the sheet-like ceramic rubber into strips on a rubber filter, so as to obtain the ceramic silicone rubber.

The ceramic silicone rubber in this embodiment is a novel high-molecule composite material; the ceramic silicone rubber is non-toxic and odourless at room temperature, and has good flexibility and elasticity in addition to properties of normal silicone rubbers; after being burned at a temperature of 650°C to 3,000°C for more than 3 min, the organic components in the silicone rubber may be ablated and converted into a ceramic shell in a very short period rather than burned into ashes; moreover, the ceramic shell form a hard protective layer, and the protective layer isolates an article from the outside flame, thereby preventing the article from being continuously burnt by the flame and damaged. The longer the ablation time is, the higher the temperature is, and the harder the shell is. Furthermore, the smoke generated by the ceramic silicone rubber of the present application in the early 2 to 3 min of the ablation is non-toxic and free of halogen, because the smoke is mainly generated by the combustion of organic silicon, and the smoke disappears after 2 to 3 min of combustion, and no smoke is generated any more in the process of blocking the flame. It can be seen from the properties of the ceramic silicone rubber in the embodiments that, the ceramic silicone rubber in this embodiment is an excellent fire resistant material.

Due to the excellent properties, the ceramic silicone rubber in this embodiment has wide applications and good application prospects. When the ceramic silicone rubber is applied in vulcanization of specific products, 1 to 5 parts of a cross-linking agent needs to be added, and this number of parts is corresponding to the number of parts of the original components of the ceramic silicone rubber. The cross-linking agent may be a peroxide vulcanizing agent, such as 2,5-dimethyl-2,5-bis(t-butylperoxy)hexane (commonly known as DHBP), 2,4-dichlorobenzoyl chloride (commonly known as DCOC) and dicumyl peroxide (commonly known as DCP). The use of the ceramic silicone rubber in this embodiment includes but is not limited to the following aspects:
(1) being used as the material of an insulating layer for a wire; the wire includes a conductor and an insulating layer coating the conductor, and the material of the insulating layer includes the ceramic silicone rubber; when used to manufacture a wire, the ceramic silicone rubber may be extruded by employing an extruder, and the cross-linking agent is added during extrusion;
(2) being used as the material of a jacket for a cable; the cable includes several packets of insulating conductors and jackets coating the insulating conductors, and the material of the jacket includes the ceramic silicone rubber; when used to manufacture a cable, the ceramic silicone rubber may be extruded by employing an extruder, and the cross-linking agent is added during extrusion;
(3) being used as the material of a fire-proof plate, for example, a constructional fire-proof plate;
(4) being used as the material of a fire layer in a fire-proof door;
(5) being used as the material of a protective layer or an insulating layer of other products; and
(6) being used as the material of other products.

When the ceramic silicone rubber in this embodiment is used as the material of an insulating layer for a cable, the cable prepared according to the method is subjected to an SGS test, and the test results are consistent with the requirements of the EU RoHS instruction 2002/95/EC and subsequent amendments; the results of smoke toxicity test by the National Fire Protection Building Materials Quality Supervision and Inspection Center show that, according to GB/T 20285-2006, the smoke toxicity of the material is determined to reach a quasi-security level 1 (ZA1); the results of 90 min-fire test, the material is in accordance with GB/T 19666-2005.

In the following, several specific examples of the ceramic silicone rubber in this embodiment are described, unless otherwise stated, all the parts are parts by weight.

Example 1: 60 parts of dimethylsilicone rubber (MQ), 20 parts of silicon dioxide, 1 part of methyl silicone oil, 0.1 part of KH560, 20 parts of silicate glass powder and 1 part of 2,5-dimethyl-2,5-bis(t-butylperoxy)hexane were used to prepare a ceramic silicone rubber according to the first method for preparing a ceramic silicone rubber, and when the ceramic silicone rubber is vulcanized and formed, 1 part of 2,5-dimethyl-2,5-bis(t-butylperoxy)hexane was added.

Example 2: 100 parts of methyl phenyl vinyl silicone rubber (PVMQ), 100 parts of silicon dioxide, 20 parts of hydroxyl silicone oil, 10 parts of OL-T671, 120 parts of borate glass powder and 5 parts of dicumyl peroxide (commonly known as DCP) were used to prepare a ceramic silicone rubber according to the second method for preparing a ceramic silicone rubber, and when the ceramic silicone rubber is vulcanized and formed, 5 parts of dicumyl peroxide was added.

Example 3: 30 parts of dimethylsilicone rubber (MQ), 50 parts of methyl vinyl silicone rubber (VMQ), 80 parts of silicon dioxide, 10 parts of hydroxyl silicone oil, 3 parts of A172, 70 parts of phosphate glass powder and 3 parts of 2,4-dichlorobenzoyl chloride (commonly known as DCOC) were used to prepare a ceramic silicone rubber according to the second method for preparing a ceramic silicone rubber, and when the ceramic silicone rubber is vulcanized and formed, 3 parts of 2,4- dichlorobenzoyl chloride was added.

The ceramic silicone rubber in this embodiment may further contains (6) 10 to 35 parts of a foaming agent; (7) 1 to 10 parts of a foaming auxiliary agent, so as to form a ceramic silicone rubber foam.

The foaming agent is one or more of azodicarbonamide (AC), dinitrosopentamethylene tetramine (foaming agent H) and 4,4'-oxybis(benzenesulfonyl hydrazide).

The foaming auxiliary agent is one or more of zinc stearate, calcium stearate and active zinc oxide.

The method for preparing the ceramic silicone rubber foam is similar to the method for preparing the ceramic silicone rubber, and includes two preparation methods, where the first preparation method includes the following steps:
(1) mixing 60 to 100 parts of silicone rubber, 20 to 100 parts of silicon dioxide, 1 to 20 parts of silicone oil, and 0.1 to 10 parts of a coupling agent in a kneading machine, where the temperature is not higher than 100°C;
(2) vacuumizing the kneading machine for 30 to 120 min or 60 min preferably, where a vacuum degree may be -0.065Mpa, and the temperature is kept not higher than 165°C;
(3) adding 20 to 120 parts of ceramic powder to the kneading machine, so that the ceramic powder is mixed uniformly with the mixed silicone rubber, silicon dioxide, silicone oil, and a coupling agent, so as to form a lump-like ceramic rubber;
(4) taking the lump-like ceramic rubber out of the kneading machine, and cooling the lump-like ceramic rubber;
(5) open-milling the cooled lump-like ceramic rubber on an open mill, so as to cut the lump-like ceramic rubber into sheets; and
(6) filtering the sheet-like ceramic rubber into strips on a rubber filter, so as to obtain the ceramic silicone rubber foam.

The second method for preparing the ceramic silicone rubber foam is as follows:
(1) mixing the materials of 60 to 100 parts of silicone rubber, 20 to 100 parts of silicon dioxide, 1 to 20 parts of silicone oil, 0.1 to 10 parts of a coupling agent, and 20 to 120 parts of ceramic powder in a kneading machine, where the temperature is not higher than 100°C;
(2) vacuumizing the kneading machine for 30 to 120 min or 60 min preferably, where a vacuum degree may be -0.065Mpa, and the temperature is kept not higher than 165°C, to form a lump-like ceramic rubber;
(3) taking the lump-like ceramic rubber out of the kneading machine, and cooling the lump-like ceramic rubber;
(4) open-milling the cooled lump-like ceramic rubber on an open mill, so as to cut the lump-like ceramic rubber into sheets; and
(5) filtering the sheet-like ceramic rubber into strips on a rubber filter, so as to obtain the ceramic silicone rubber foam.

In the following, several preferred specific examples of the ceramic silicone rubber foam in this embodiment are recorded, unless otherwise stated, all the parts are parts by weight.

Example 4: 70 parts of dimethylsilicone rubber (MQ), 50 parts of silicon dioxide, 6 parts of methyl silicone oil, 2 parts of A171, 30 parts of silicate glass powder, 1 part of 2,5-dimethyl-2,5-bis(t-butylperoxy)hexane (commonly known as DHBP), 10 parts of azodicarbonamide (AC), 2 parts of zinc stearate were used to prepare a ceramic silicone rubber foam according to the first method for preparing a ceramic silicone rubber foam, and when the ceramic silicone rubber foam is vulcanized and formed, 1 part of 2,5-dimethyl-2,5-bis(t-butylperoxy)hexane was added.

Example 5: 90 parts of methyl phenyl vinyl silicone rubber (PVMQ), 95 parts of silicon dioxide, 20 parts of hydroxyl silicone oil, 3 parts of A172, 5 parts of KR-TTS, 115 parts of borate glass powder, 35 parts of dinitrosopentamethylene tetramine (a foaming agent H), and 9 parts of active zinc oxide were used to prepare a ceramic silicone rubber foam according to the second method for preparing a ceramic silicone rubber foam, and when the ceramic silicone rubber foam is vulcanized and formed, 5 parts of dicumyl peroxide was added.

Example 6: 80 parts of methyl vinyl silicone rubber (VMQ), 80 parts of silicon dioxide, 10 parts of hydroxyl silicone oil, 3 parts of A172, 70 parts of phosphate glass powder, 3 parts of 2,4-dichlorobenzoyl chloride (commonly known as DCOC), 11 parts of azodicarbonamide (AC), 22 parts of 4,4'-oxybis(benzenesulfonyl hydrazide), 2 parts of zinc stearate and 5 parts of calcium stearate were used to prepare a ceramic silicone rubber foam according to the second method for preparing a ceramic silicone rubber foam, and when the ceramic silicone rubber foam is vulcanized and formed, 3 parts of 2,4-dichlorobenzoyl chloride was added.

The ceramic silicone rubber foam not only has the fire resistance function of the ceramic silicone rubber, but also has the advantages of low density and light weight after foaming compared with the ceramic silicone rubber of an equal volume; the thermal insulation, heat preservation and sound insulation performances of the ceramic silicone rubber foam are also improved; therefore, the ceramic silicone rubber foam may be used as a thermal insulating, heat preserving and sound insulating material.

The ceramic silicone rubber in this embodiment can not only form a ceramic silicone rubber foam, and further contains, on the basis of the ceramic silicone rubber foam: (8) 5 to 30 parts of a flame retardant, so as to form a ceramic silicone rubber flame-retardant foam.

The flame retardant can be a halogen-free flame retardant or a halogen-containing flame retardant.

The halogen-free flame retardant may be one or more of red phosphorus, a phosphate flame retardant, magnesium hydroxide, aluminium hydroxide, zinc borate, ammonium polyphosphate, melamine polyphosphate or polyphosphate and a pentaerythritol flame retardant.

The halogen-containing flame retardant is one or more of chlorinated paraffin, tetrachlorophthalic anhydride, dibromobenzene ester, tetrabromoethane, decabromodiphenyl ether, decabromodiphenylethane, tetrabromobisphenol, octabromoether, brominated polystyrene and brominated epoxy resin.

The method for preparing the ceramic silicone rubber flame-retardant foam is similar to the method for preparing the ceramic silicone rubber foam, and includes two preparation methods, where the first preparation method is as follows:
(1) mixing 60 to 100 parts of silicone rubber, 20 to 100 parts of silicon dioxide, 1 to 20 parts of silicone oil, and 0.1 to 10 parts of a coupling agent in a kneading machine, where the temperature is not higher than 100°C;
(2) vacuumizing the kneading machine for 30 to 120 min or 60 min preferably, where a vacuum degree may be -0.065Mpa, and the temperature is kept not higher than 165°C;
(3) adding 20 to 120 parts of ceramic powder to the kneading machine, so that the ceramic powder is mixed uniformly with the mixed silicone rubber, silicon dioxide, silicone oil, and a coupling agent, so as to form a lump-like ceramic rubber;
(4) taking the lump-like ceramic rubber out of the kneading machine, and cooling the lump-like ceramic rubber;
(5) open-milling the cooled lump-like ceramic rubber on an open mill, so as to cut the lump-like ceramic rubber into sheets; and
(6) filtering the sheet-like ceramic rubber into strips on a rubber filter, so as to obtain the ceramic silicone rubber flame-retardant foam.

The second method for preparing the ceramic silicone rubber foam is as follows:
(1) mixing the materials of 60 to 100 parts of silicone rubber, 20 to 100 parts of silicon dioxide, 1 to 20 parts of silicone oil, 0.1 to 10 parts of a coupling agent, and 20 to 120 parts of ceramic powder in a kneading machine, where the temperature is not higher than 100°C;
(2) vacuumizing the kneading machine for 30 to 120 min or 60 min preferably, where a vacuum degree may be -0.065Mpa, and the temperature is kept not higher than 165°C, to form a lump-like ceramic rubber;
(3) taking the lump-like ceramic rubber out of the kneading machine, and cooling the lump-like ceramic rubber;
(4) open-milling the cooled lump-like ceramic rubber on an open mill, so as to cut the lump-like ceramic rubber into sheets; and
(5) filtering the sheet-like ceramic rubber into strips on a rubber filter, so as to obtain the ceramic silicone rubber flame-retardant foam.

In the following, several preferred specific examples of the ceramic silicone rubber flame-retardant foam in this embodiment are recorded, unless otherwise stated, all the parts are parts by weight.

Example 7: 80 parts of dimethylsilicone rubber (MQ), 10 parts of silicon dioxide, 3 parts of methyl silicone oil, 0.5 part of KH560, 20 parts of silicate glass powder, 1 part of dicumyl peroxide, 12 parts of azodicarbonamide (AC), 1 part of zinc stearate, 4 parts of red phosphorus were used to prepare a ceramic silicone rubber foam according to the first method for preparing a ceramic silicone rubber foam, and when the ceramic silicone rubber foam is vulcanized and formed, 1 part of dicumyl peroxide was added.

Example 8: 100 parts of methyl phenyl vinyl silicone rubber (PVMQ), 100 parts of silicon dioxide, 20 parts of hydroxyl silicone oil, 4 parts of KR-TTS, 120 parts of silicate glass powder, 5 parts of dicumyl peroxide, 35 parts of dinitrosopentamethylene tetramine (foaming agent H), 9 parts of active zinc oxide and 28 parts of aluminium hydroxide flame retardant were used to prepare a ceramic silicone rubber foam according to the second method for preparing a ceramic silicone rubber foam, and when the ceramic silicone rubber foam is vulcanized and formed, 5 parts of dicumyl peroxide was added.

Example 9: 80 parts of methyl vinyl silicone rubber (VMQ), 80 parts of silicon dioxide, 10 parts of hydroxyl silicone oil, 3 parts of A171, 70 parts of phosphate glass powder, 3 parts of 2,4-dichlorobenzoyl chloride, 11 parts of azodicarbonamide (AC), 22 parts of 4,4'-oxybis(benzenesulfonyl hydrazide), 2 parts of zinc stearate, 6 parts of calcium stearate, 2 parts of ammonium polyphosphate and 14 parts of pentaerythritol flame retardant were used to prepare a ceramic silicone rubber foam according to the second method for preparing a ceramic silicone rubber foam, and when the ceramic silicone rubber foam is vulcanized and formed, 3 parts of 2,4-dichlorobenzoyl chloride was added.

In addition to the characteristics of low density and light weight and the functions such as fire resistance, thermal insulation, heat preservation and sound insulation of the ceramic silicone rubber foam, the ceramic silicone rubber flame-retardant foam also has the flame retardant function, that is, due to the flame retardance, the ceramic silicone rubber flame-retardant foam first remains nonflammable, so that the fire resistant and flame retardant performance is improved, and the first lien of defense against fire is formed; if the outside flame reaches a certain level and breaks through the first line of defense, the organic components in the silicone rubber may be ablated and converted into a ceramic shell in a very short period of time rather than not be burnt into ashes, and the ceramic shell forms a hard protective layer, and the protective layer isolates an article from the outside flame, thereby preventing the article from being continuously burnt by the flame and damaged and forming a second line of defense against fire.

In view of the above, the ceramic silicone rubber of the present application is a novel high-molecule composite material, which can be easily processed and has low production costs; the material is non-toxic and odourless at room temperature, and has good flexibility and elasticity in addition to properties of normal silicone rubbers; after being burned at a temperature of 950°C for 90 min, the organic components in the silicone rubber may be ablated and converted into a ceramic shell in a very short period of time rather than burned into ashes; moreover, the ceramic shell form a hard protective layer, and the protective layer isolates an article from the outside flame, thereby preventing the article from being continuously burnt by the flame and damaged. Furthermore, the smoke generated by the ceramic silicone rubber of the present application in the early 2 to 3 min of the ablation is non-toxic and free of halogen, because the smoke is mainly generated by the combustion of organic silicon, and the smoke disappears after 2 to 3 min of combustion, and no smoke is generated any more in the process of blocking the flame. Therefore, the ceramic silicone rubber of the present application is an excellent fire resistant material.

## Claims

1. A ceramic silicone rubber foam, comprising, by weight:
60 to 100 parts of silicone rubber;
20 to 100 parts of silicon dioxide;
1 to 20 parts of silicone oil;
0.1 to 10 parts of a coupling agent;
20 to 120 parts of ceramic powder, wherein the ceramic powder is one or more of silicate glass powder, borate glass powder, phosphate glass powder and lead-based glass powder;
10 to 35 parts of a foaming agent; and
1 to 10 parts of a foaming auxiliary agent.

2. The ceramic silicone rubber foam according to claim 1, wherein the silicone rubber is one or more of dimethyl silicone rubber, methyl vinyl silicone rubber and methyl phenyl vinyl silicone rubber.

3. The ceramic silicone rubber foam according to claim 1, wherein the viscosity of the silicone oil is 10 to 1,000 centipoises.

4. The ceramic silicone rubber foam according to claim 1, wherein the coupling agent is any one or more of a silane coupling agent, a titanate coupling agent and an aluminium-titanium compound coupling agent.

5. The ceramic silicone rubber foam according to claim 1, wherein the coupling agent is one or more ofy-(2,3-epoxypropoxy)propyltrimethoxysilane, vinyltrimethoxysilane, vinyltris(β-methoxyethoxy)silane, triisostearoyl isopropoxy titanate and ethylene dioleoyltitanate.

6. The ceramic silicone rubber foam according to claim 1, wherein the foaming agent is one or more of azodicarbonamide, dinitrosopentamethylene tetramine and 4,4'-oxybis(benzenesulfonyl hydrazide).

7. The ceramic silicone rubber foam according to claim 1, wherein the foaming auxiliary agent is one or more of zinc stearate, calcium stearate and active zinc oxide.

8. A method for preparing a ceramic silicone rubber foam, comprising:
(1) mixing the materials of 60 to 100 parts of silicone rubber, 20 to 100 parts of silicon dioxide, 1 to 20 parts of silicone oil, 0.1 to 10 parts of a coupling agent, 10 to 35 parts of a foaming agent, and 1 to 10 parts of a foaming auxiliary agent in a kneading machine, wherein the temperature is not higher than 100°C;
(2) vacuumizing the kneading machine for 30 to 120 min, wherein the temperature is kept not higher than 165°C;
(3) after vacuumizing the kneading machine, adding 20 to 120 parts of ceramic powder to the kneading machine, so that the ceramic powder is mixed uniformly with the mixed silicone rubber, silicon dioxide, silicone oil, and a coupling agent, so as to form a lump-like ceramic rubber, wherein the ceramic powder is one or more of silicate glass powder, borate glass powder, phosphate glass powder and lead-based glass powder;
(4) taking the lump-like ceramic rubber out of the kneading machine, and cooling the lump-like ceramic rubber;
(5) open-milling the cooled lump-like ceramic rubber on an open mill, so as to cut the lump-like ceramic rubber into sheets; and
(6) filtering the sheet-like ceramic rubber into strips on a rubber filter, so as to obtain the ceramic silicone rubber foam.

9. A method for preparing a ceramic silicone rubber foam, comprising:
(1) mixing the materials of 60 to 100 parts of silicone rubber, 20 to 100 parts of silicon dioxide, 1 to 20 parts of silicone oil, 0.1 to 10 parts of a coupling agent, 20 to 120 parts of ceramic powder, 10 to 35 parts of a foaming agent, and 1 to 10 parts of a foaming auxiliary agent in a kneading machine, wherein the temperature is not higher than 100°C, wherein the ceramic powder is one or more of silicate glass powder, borate glass powder, phosphate glass powder and lead-based glass powder;
(2) vacuumizing the kneading machine for 30 to 120 min, wherein the temperature is kept not higher than 165°C, and uniformly mixing the materials, to form a lump-like ceramic rubber;
(3) taking the lump-like ceramic rubber out of the kneading machine, and cooling the lump-like ceramic rubber;
(4) open-milling the cooled lump-like ceramic rubber on an open mill, so as to cut the lump-like ceramic rubber into sheets; and
(5) filtering the sheet-like ceramic rubber into strips on a rubber filter, so as to obtain the ceramic silicone rubber foam.

10. A ceramic silicone rubber flame-retardant foam, comprising the ceramic silicone rubber foam according to claim 1, 2, 3, 4 or 5, and further comprising 5 to 30 parts of a flame retardant.

11. The ceramic silicone rubber flame-retardant foam according to claim 10, wherein the flame retardant is a halogen-free flame retardant.

12. The ceramic silicone rubber flame-retardant foam according to claim 11, wherein the halogen-free flame retardant is one or more of red phosphorus, a phosphate flame retardant, magnesium hydroxide, aluminium hydroxide, zinc borate, ammonium polyphosphate, melamine pyrophosphate or polyphosphate and a pentaerythritol flame retardant.

13. The ceramic silicone rubber flame-retardant foam according to claim 10, wherein the flame retardant is a halogen-containing flame retardant.

14. The ceramic silicone rubber flame-retardant foam according to claim 13, wherein the halogen-containing flame retardant is one or more of chlorinated paraffin, tetrachlorophthalic anhydride, dibromobenzene ester, tetrabromoethane, decabromodiphenyl ether, decabromodiphenylethane, tetrabromobisphenol, octabromoether, brominated polystyrene and brominated epoxy resin.

15. A method for preparing a ceramic silicone rubber flame-retardant foam, comprising:
(1) mixing materials of 60 to 100 parts of silicone rubber, 20 to 100 parts of silicon dioxide, 1 to 20 parts of silicone oil, 0.1 to 10 parts of a coupling agent, 20 to 120 parts of ceramic powder, 10 to 35 parts of a foaming agent, 1 to 10 parts of a foaming auxiliary agent, and 5 to 30 parts of a flame retardant in a kneading machine, wherein the temperature is not higher than 100°C, wherein the ceramic powder is one or more of silicate glass powder, borate glass powder, phosphate glass powder and lead-based glass powder;
(2) vacuumizing the kneading machine for 30 to 120 min, wherein the temperature is kept not higher than 165°C, and uniformly mixing the materials, to form a lump-like ceramic rubber;
(3) taking the lump-like ceramic rubber out of the kneading machine, and cooling the lump-like ceramic rubber;
(4) open-milling the cooled lump-like ceramic rubber on an open mill, so as to cut the lump-like ceramic rubber into sheets; and
(5) filtering the sheet-like ceramic rubber into strips on a rubber filter, so as to obtain the ceramic silicone rubber flame-retardant foam.

## Patentansprüche

1. Keramischer Silikonkautschukschaum, der Folgendes umfasst (Gewichtsteile):
60 bis 100 Teile Silikonkautschuk;
20 bis 100 Teile Siliciumdioxid;
1 bis 20 Teile Silikonöl;
0,1 bis 10 Teile eines Kupplungsmittels;
20 bis 120 Teile Keramikpulver, wobei das Keramikpulver eines oder mehrere aus Silicatglaspulver, Boratglaspulver, Phosphatglaspulver und Glaspulver auf Bleibasis ist;
10 bis 35 Teile eines Schaummittels; und
1 bis 10 Teile eines Schaumhilfsmittels.

2. Keramischer Silikonkautschukschaum nach Anspruch 1, wobei der Silikonkautschuk eines oder mehrere aus Dimethylsilikonkautschuk, Methylvinylsilikonkautschuk und Methylphenylvinylsilikonkautschuk ist.

3. Keramischer Silikonkautschukschaum nach Anspruch 1, wobei die Viskosität des Silikonöls 10 bis 1.000 cP beträgt.

4. Keramischer Silikonkautschukschaum nach Anspruch 1, wobei das Kupplungsmittel eines oder mehrere aus einem Silankupplungsmittel, einem Titanatkupplungsmittel und einem Aluminium-Titanverbindung-Kupplungsmittel ist.

5. Keramischer Silikonkautschukschaum nach Anspruch 1, wobei das Kupplungsmittel eines oder mehrere aus γ-(2,3-Epoxypropoxy)propyltrimethoxysilan, Vinyltrimethoxysi|an, Vinyltris(β-methoxyethoxy)si|an, Triisostearoylisopropoxytitanat und Ethylendioleoyltitanat ist.

6. Keramischer Silikonkautschukschaum nach Anspruch 1, wobei das Schaummittel eines oder mehrere aus Azodicarbonamid, Dinitrosopentamethylentetramin und 4,4'-Oxybis(benzolsulfonylhydrazid) ist.

7. Keramischer Silikonkautschukschaum nach Anspruch 1, wobei das Schaumhilfsmittel eines oder mehrere aus Zinkstearat, Calciumstearat und aktivem Zinkoxid ist.

8. Verfahren zur Herstellung eines keramischen Silikonkautschukschaums, das Folgendes umfasst:
(1) Vermischen der Materialien von 60 bis 100 Teilen Silikonkautschuk, 20 bis 100 Teilen Siliciumdioxid, 1 bis 20 Teilen Silikonöl, 0,1 bis 10 Teilen eines Kupplungsmittels, 10 bis 35 Teilen eines Schaummittels und 1 bis 10 Teilen eines Schaumhilfsmittels in einer Knetmaschine, in der die Temperatur nicht höher als 100 °C ist;
(2) Evakuieren der Knetmaschine für 30 bis 120 min, wobei die Temperatur auf nicht mehr als 165 °C behalten wird;
(3) nach dem Evakuieren der Knetmaschine Zusetzen von 20 bis 120 Teilen Keramikpulver zur Knetmaschine, sodass das Keramikpulver gleichförmig mit dem gemischten Silikonkautschuk, Siliciumdioxid, Silikonöl und einem Kupplungsmittel gemischt wird, um einen klumpenartigen Keramikkautschuk zu bilden, wobei das Keramikpulver eines oder mehrere aus Silicatglaspulver, Boratglaspulver, Phosphatglaspulver und Glaspulver auf Bleibasis ist;
(4) Herausnehmen des klumpenartigen Keramikkautschuks aus der Knetmaschine und Abkühlen des klumpenartigen Keramikkautschuks;
(5) offenes Mahlen des abgekühlten klumpenartigen Keramikkautschuks auf einer offenen Mühle, um den klumpenartigen Keramikkautschuk in Scheiben zu schneiden; und
(6) Filtrieren des scheibenartigen Keramikkautschuks in Streifen auf einem Kautschukfilter, um den keramischen Silikonkautschukschaum zu erhalten.

9. Verfahren zur Herstellung eines keramischen Silikonkautschukschaums, das Folgendes umfasst:
(1) Vermischen der Materialien von 60 bis 100 Teilen Silikonkautschuk, 20 bis 100 Teilen Siliciumdioxid, 1 bis 20 Teilen Silikonöl, 0,1 bis 10 Teilen eines Kupplungsmittels, 20 bis 120 Teilen eines Keramikpulvers, 10 bis 35 Teilen eines Schaummittels und 1 bis 10 Teilen eines Schaumhilfsmittels in einer Knetmaschine, in der die Temperatur nicht höher als 100 °C ist, wobei das Keramikpulver eines oder mehrere aus Silicatglaspulver, Boratglaspulver, Phosphatglaspulver und Glaspulver auf Bleibasis ist;
(2) Evakuieren der Knetmaschine für 30 bis 120 min, wobei die Temperatur auf nicht mehr als 165 °C behalten wird, und gleichförmiges Vermischen der Materialien, um einen klumpenartigen Keramikkautschuk zu bilden;
(3) Herausnehmen des klumpenartigen Keramikkautschuks aus der Knetmaschine und Abkühlen des klumpenartigen Keramikkautschuks;
(4) offenes Mahlen des abgekühlten klumpenartigen Keramikkautschuks auf einer offenen Mühle, um den klumpenartigen Keramikkautschuk in Scheiben zu schneiden; und
(5) Filtrieren des scheibenartigen Keramikkautschuks in Streifen auf einem Kautschukfilter, um den keramischen Silikonkautschukschaum zu erhalten.

10. Keramischer Silikonkautschuk-Flammschutzschaum, der einen keramischen Silikonkautschukschaum nach Anspruch 1, 2, 3, 4 oder 5 umfasst, weiters umfassend 5 bis 30 Teile eines Flammschutzmittels.

11. Keramischer Silikonkautschuk-Flammschutzschaum nach Anspruch 10, wobei das Flammschutzmittel ein halogenfreies Flammschutzmittel ist.

12. Keramischer Silikonkautschuk-Flammschutzschaum nach Anspruch 11, wobei das halogenfreie Flammschutzmittel eines oder mehrere aus rotem Phosphor, einem Phosphatflammschutzmittel, Magnesiumhydroxid, Aluminiumhydroxid, Zinkborat, Ammoniumpolyphosphat, Melaminpyrophosphat oder -polyphosphat und einem Pentaerythrit-Flammschutzmittel ist.

13. Keramischer Silikonkautschuk-Flammschutzschaum nach Anspruch 10, wobei das Flammschutzmittel ein Halogen enthaltendes Flammschutzmittel ist.

14. Keramischer Silikonkautschuk-Flammschutzschaum nach Anspruch 13, wobei das Halogen enthaltende Flammschutzmittel eines oder mehrere aus chloriertem Paraffin, Tetrachlorphthalsäureanhydrid, Dibrombenzolester, Tetrabromethan, Decabromdiphenylether, Decabromdiphenylethan, Tetrabrombisphenol, Octabromether, bromiertem Polystyrol und bromiertem Epoxyharz ist.

15. Verfahren zur Herstellung eines keramischen Silikonkautschuk-Flammschutzschaums, das Folgendes umfasst:
(1) Vermischen der Materialien von 60 bis 100 Teilen Silikonkautschuk, 20 bis 100 Teilen Siliciumdioxid, 1 bis 20 Teilen Silikonöl, 0,1 bis 10 Teilen eines Kupplungsmittels, 20 bis 120 Teilen eines Keramikpulvers, 10 bis 35 Teilen eines Schaummittels, 1 bis 10 Teilen eines Schaumhilfsmittels und 5 bis 30 Teilen eines Flammschutzmittels in einer Knetmaschine, in der die Temperatur nicht höher als 100 °C ist, wobei das Keramikpulver eines oder mehrere aus Silicatglaspulver, Boratglaspulver, Phosphatglaspulver und Glaspulver auf Bleibasis ist;
(2) Evakuieren der Knetmaschine für 30 bis 120 min, wobei die Temperatur auf nicht mehr als 165 °C behalten wird, und gleichförmiges Vermischen der Materialien, um einen klumpenartigen Keramikkautschuk zu bilden;
(3) Herausnehmen des klumpenartigen Keramikkautschuks aus der Knetmaschine und Abkühlen des klumpenartigen Keramikkautschuks;
(4) offenes Mahlen des abgekühlten klumpenartigen Keramikkautschuks auf einer offenen Mühle, um den klumpenartigen Keramikkautschuk in Scheiben zu schneiden; und
(5) Filtrieren des scheibenartigen Keramikkautschuks in Streifen auf einem Kautschukfilter, um den keramischen Silikonkautschuk-Flammschutzschaum zu erhalten.

## Revendications

1. Mousse de caoutchouc de silicone et de céramique comprenant, en poids :
60 à 100 parties de caoutchouc de silicone ;
20 à 100 parties de dioxyde de silicium ;
1 à 20 parties d'huile de silicone ;
0,1 à 10 parties d'un agent de couplage ;
20 à 120 parties d'une poudre de céramique, laquelle poudre de céramique est une ou plusieurs parmi une poudre de verre de silice, une poudre de verre de borate, une poudre de verre de phosphate et une poudre de verre au plomb ;
10 à 35 parties d'un agent moussant ; et
1 à 10 parties d'un agent auxiliaire de moussage.

2. Mousse de caoutchouc de silicone et de céramique selon la revendication 1, dans laquelle le caoutchouc de silicone est un ou plusieurs parmi un caoutchouc de diméthylsilicone, un caoutchouc de méthylvinylsilicone et un caoutchouc de méthylphénylvinylsilicone.

3. Mousse de caoutchouc de silicone et de céramique selon la revendication 1, dans laquelle la viscosité de l'huile de silicone est de 10 à 1000 centipoises.

4. Mousse de caoutchouc de silicone et de céramique selon la revendication 1, dans laquelle l'agent de couplage est l'un quelconque ou plusieurs parmi un agent de couplage de type silane, un agent de couplage de type titanate et un agent de couplage de type composé d'aluminium et de titane.

5. Mousse de caoutchouc de silicone et de céramique selon la revendication 1, dans laquelle l'agent de couplage est un ou plusieurs parmi le γ-(2,3-époxγ-propoxy)propyltriméthoxysilane, le vinyltriméthoxysilane, le vinyltris(β-méthoxyéthoxy)silane, l'isopropoxytitanate de triisostéaroyle et le dioléoyltitanate d'éthylène.

6. Mousse de caoutchouc de silicone et de céramique selon la revendication 1, dans laquelle l'agent moussant est un ou plusieurs parmi l'azodicarbonamide, la dinitrosopentaméthylènetétramine et le 4,4'-oxybis-(benzènesulfonylhydrazide).

7. Mousse de caoutchouc de silicone et de céramique selon la revendication 1, dans laquelle l'agent auxiliaire de moussage est un ou plusieurs parmi le stéarate de zinc, le stéarate de calcium et l'oxyde de zinc actif.

8. Procédé pour préparer une mousse de caoutchouc de silicone et de céramique, comprenant :
(1) le mélange de matériaux consistant en 60 à 100 parties de caoutchouc de silicone, 20 à 100 parties de dioxyde de silicium, 1 à 20 parties d'huile de silicone, 0,1 à 10 parties d'un agent de couplage, 10 à 35 parties d'un agent moussant, et 1 à 10 parties d'un agent auxiliaire de moussage, dans une machine de malaxage dans laquelle la température ne dépasse pas 100°C ;
(2) la mise sous vide de la machine de malaxage pendant 30 à 120 minutes, la température étant maintenue non supérieure à 165°C ;
(3) après mise sous vide de la machine de malaxage, l'addition de 20 à 120 parties de poudre de céramique dans la machine de malaxage, de façon que la poudre de céramique soit mélangée uniformément avec le mélange de caoutchouc de silicone, de dioxyde de silicium, d'huile de silicone, et d'un agent de couplage, de façon à former un caoutchouc de céramique analogue à une motte, la poudre de céramique étant une ou plusieurs parmi une poudre de verre de silicate, une poudre de verre de borate, une poudre de verre de phosphate et une poudre de verre au plomb ;
(4) la sortie du caoutchouc de céramique analogue à une motte hors de la machine de malaxage, et le refroidissement du caoutchouc de céramique analogue à une motte ;
(5) le broyage dans un malaxeur à cylindres du caoutchouc de céramique analogue à une motte refroidi, de façon à découper en feuilles le caoutchouc de céramique analogue à une motte ; et
(6) la filtration du caoutchouc de céramique analogue à une feuille en bandes sur un filtre de caoutchouc, de façon que soit obtenue la mousse de caoutchouc de silicone et de céramique.

9. Procédé pour préparer une mousse de caoutchouc de silicone et de céramique, comprenant :
(1) le mélange de matériaux consistant en 60 à 100 parties de caoutchouc de silicone, 20 à 100 parties de dioxyde de silicium, 1 à 20 parties d'huile de silicone, 0,1 à 10 parties d'un agent de couplage, 20 à 120 parties d'une poudre de céramique, 10 à 35 parties d'un agent moussant, et 1 à 10 parties d'un agent auxiliaire de moussage, dans une machine de malaxage dans laquelle la température ne dépasse pas 100°C, la poudre de céramique étant une ou plusieurs parmi une poudre de verre de silicate, une poudre de verre de borate, une poudre de verre de phosphate et une poudre de verre au plomb ;
(2) la mise sous vide de la machine de malaxage pendant 30 à 120 minutes, la température étant maintenue non supérieure à 165°C, et le mélange uniforme des matériaux pour former un caoutchouc de céramique analogue à une motte ;
(3) la sortie du caoutchouc de céramique analogue à une motte hors de la machine de malaxage, et le refroidissement du caoutchouc de céramique analogue à une motte ;
(4) le broyage dans un malaxeur à cylindres du caoutchouc de céramique analogue à une motte refroidi, de façon à découper en feuilles le caoutchouc de céramique analogue à une motte ; et
(5) la filtration du caoutchouc de céramique analogue à une feuille en bandes sur un filtre de caoutchouc, de façon que soit obtenue la mousse de caoutchouc de silicone et de céramique.

10. Mousse ignifugeante de caoutchouc de silicone et de céramique, comprenant la mousse de caoutchouc de silicone et de céramique selon la revendication 1, 2, 3, 4 ou 5, et comprenant en outre 5 à 30 parties d'un agent ignifugeant.

11. Mousse ignifugeante de caoutchouc de silicone et de céramique selon la revendication 10, dans laquelle l'agent ignifugeant est un agent ignifugeant sans halogène.

12. Mousse ignifugeante de caoutchouc de silicone et de céramique selon la revendication 11, dans laquelle l'agent ignifugeant sans halogène est un ou plusieurs parmi le phosphore rouge, un agent ignifugeant de type phosphate, l'hydroxyde de magnésium, l'hydroxyde d'aluminium, le borate de zinc, le polyphosphate d'ammonium, le pyrophosphate ou polyphosphate de mélamine, et un agent ignifugeant de type pentaérythritol.

13. Mousse ignifugeante de caoutchouc de silicone et de céramique selon la revendication 10, dans laquelle l'agent ignifugeant est un agent ignifugeant contenant un halogène.

14. Mousse ignifugeante de caoutchouc de silicone et de céramique selon la revendication 13, dans laquelle l'agent ignifugeant contenant un halogène est un ou plusieurs parmi la paraffine chlorée, l'anhydride tétrachlorophtalique, un ester de dibromobenzène, le tétrabromoéthane, le décabromodiphényléther, le décabromodiphényléthane, le tétrabromobisphénol, l'octabromoéther, le polystyrène bromé et une résine époxy bromée.

15. Procédé pour préparer une mousse ignifugeante de caoutchouc de silicone et de céramique, comprenant :
(1) le mélange de matériaux consistant en 60 à 100 parties de caoutchouc de silicone, 20 à 100 parties de dioxyde de silicium, 1 à 20 parties d'huile de silicone, 0,1 à 10 parties d'un agent de couplage, 20 à 120 parties d'une poudre de céramique, 10 à 35 parties d'un agent moussant, et 1 à 10 parties d'un agent auxiliaire de moussage, ainsi que 5 à 30 parties d'un agent ignifugeant, dans une machine de malaxage dans laquelle la température ne dépasse pas 100°C, la poudre de céramique étant une ou plusieurs parmi une poudre de verre de silicate, une poudre de verre de borate, une poudre de verre de phosphate et une poudre de verre au plomb ;
(2) la mise sous vide de la machine de malaxage pendant 30 à 120 minutes, la température étant maintenue non supérieure à 165°C, et le mélange uniforme des matériaux pour former un caoutchouc de céramique analogue à une motte ;
(3) la sortie du caoutchouc de céramique analogue à une motte hors de la machine de malaxage, et le refroidissement du caoutchouc de céramique analogue à une motte ;
(4) le broyage dans un malaxeur à cylindres du caoutchouc de céramique analogue à une motte refroidi, de façon à découper en feuilles le caoutchouc de céramique analogue à une motte ; et
(5) la filtration du caoutchouc de céramique analogue à une feuille en bandes sur un filtre de caoutchouc, de façon que soit obtenue la mousse ignifugeante de caoutchouc de silicone et de céramique.
